# EUROPEAN PATENT SPECIFICATION

(11) **EP 3 239 996 B1**
(45) Date of publication and mention of the grant of the patent: **11.08.2021**
(21) Application number: 14909046.6
(22) Date of filing: 26.12.2014
(51) Int. Cl.: H01F 27/12, H01F 27/14

(54) **TRANSFORMER FOR VEHICLE**
TRANSFORMATOR FÜR FAHRZEUG
TRANSFORMATEUR POUR VÉHICULE

(43) Date of publication of application: 01.11.2017
(73) Proprietor: Mitsubishi Electric Corporation, Chiyoda-ku Tokyo 100-8310 (JP)
(72) Inventor: NODA, Toshihiro, Tokyo 100-8310 (JP); IMAZU, Takayuki, Tokyo 100-8310 (JP); SHINJO, Koki, Tokyo 100-8310 (JP); HAYAMIZU, Shiki, Tokyo 100-8310 (JP)
(74) Representative: Sajda, Wolf E.
(86) International application number: PCT/JP2014/084471
(87) International publication number: WO 2016/103439

(56) References cited:
- WO-A1-2014/091652
- JP-A- S61 244 662
- JP-A- 2006 245 363
- JP-A- 2007 273 777
- JP-A- 2009 106 116
- JP-U- S53 156 011
- JP-U- S54 137 816
- US-A1- 2012 154 090
- Mitsubishi: "Traction Transformer Less oil required Shell-type Transformer", , 14 September 2012 (2012-09-14), XP055491844, Retrieved from the Internet: URL:https://www.michigan-library.com/pdf/t raction-transformer-mitsubishi-electric-41 b6c.pdf [retrieved on 2018-07-11]
- None

## Description

### TECHNICAL FIELD

The present invention relates to vehicle transformers, and particularly to a vehicle transformer mounted on the roof of a railroad vehicle.

### BACKGROUND ART

Japanese Patent Laid-Open JP 2004-363 253 A (PTD 1) is a prior art document disclosing the configuration of a vehicle transformer mounted under the floor of a vehicle. In the vehicle transformer described in PTD 1, four coolers are arranged in a distributed manner on opposite sides of a transformer body mounted under the floor of the vehicle. The respective coolers are connected to each other by pipes, and a coolant in heat dissipation pipes of the respective coolers is cooled by running wind created by running of the vehicle.

Japanese Patent Laid-Open JP 2003-079 164 A (PTD 2) is a prior art document disclosing a power converter mounted on the roof of a railroad vehicle. The power converter described in PTD 2 includes: a housing containing a semiconductor stack unit for power conversion and attached to the roof of the railroad vehicle; a sealed chamber defined in the housing and containing semiconductor elements of the semiconductor stack unit; and a wind tunnel provided with a heat dissipation unit of a cooler for cooling the semiconductor elements. The wind tunnel has a wind tunnel cover facing outward and removably attached.

Patent Document JP S54 137816 U and non-patent literature Mitsubishi: "Traction Transformer Less oil required Shell-type Transformer", 14 September 2012, XP055491844 are considered relevant and each relate to a vehicle transformer according to the preamble of claim 1.

### LIST OF CITATIONS

### PATENT DOCUMENTS

PTD 1: Japanese Patent Laid-Open JP 2004-363 253 A
PTD 2: Japanese Patent Laid-Open JP 2003-079 164 A

### SUMMARY OF THE INVENTION

### TECHNICAL PROBLEM

In the vehicle transformer described in PTD 1, inlets are formed in a side surface and a bottom surface of a protective cover containing the vehicle transformer. Running wind is introduced through the inlets, to perform cooling at each cooler by utilizing the introduced running wind.

In the power converter described in PTD 2, the wind tunnel cover is provided with multiple openings through which the inside of the wind tunnel is communicated with outside air. The power converter has a natural cooling ability using these openings.

The inlets and outlets described in PTD 1 are provided in the side surface and the bottom surface of the protective cover along a traveling direction of the vehicle. The openings described in PTD 2 are provided in the wind tunnel cover arranged along a traveling direction of the vehicle. When cooling is performed by taking in running wind through holes provided in a member along a traveling direction of a vehicle in this manner, utilization efficiency of the running wind is low.

The present invention was made in view of the problem described above, and has an object to provide a vehicle transformer capable of cooling a coolant by efficiently utilizing running wind.

### SOLUTION TO THE PROBLEM

According to the invention, the problem is solved by the subject-matter outlined in the independent claim. Advantageous further developments of the invention are set forth in the dependent claims.

### ADVANTAGEOUS EFFECTS OF THE INVENTION

According to the present invention, since at least part of the pipe protrudes from the surface of transformer body along the traveling direction of vehicle, a contact between running wind and the pipe can be ensured, thus allowing the coolant to be cooled by efficient utilization of the running wind.

### BRIEF DESCRIPTION OF THE DRAWINGS

- FIG. 1: is a front view showing the configuration of a vehicle transformer according to a first example not part of the present invention.
- FIG. 2: is a side view of the vehicle transformer of FIG. 1 as seen from a direction of an arrow II.
- FIG. 3: is a plan view of the vehicle transformer of FIG. 2 as seen from a direction of an arrow III.
- FIG. 4: is a front view showing the configuration of a vehicle transformer according to a first modification of the first example not part of the present invention.
- FIG. 5: is a plan view of the vehicle transformer of FIG. 4 as seen from a direction of an arrow V.
- FIG. 6: is a plan view showing the configuration of a vehicle transformer according to a second modification of the first example not part of the present invention.
- FIG. 7: is a front view showing the configuration of a vehicle transformer according to a second example not part of the present invention.
- FIG. 8: is a side view of the vehicle transformer of FIG. 7 as seen from a direction of an arrow VIII.
- FIG. 9: is a plan view of the vehicle transformer of FIG. 8 as seen from a direction of an arrow IX.
- FIG. 10: is a front view showing the configuration of a vehicle transformer according to a modification of the second example not part of the present invention.
- FIG. 11: is a side view of the vehicle transformer of FIG. 10 as seen from a direction of an arrow XI.
- FIG. 12: is a front view showing the configuration of a vehicle transformer according to a third example not part of the present invention.
- FIG. 13: is a side view of the vehicle transformer of FIG. 12 as seen from a direction of an arrow XIII.
- FIG. 14: is a plan view of the vehicle transformer of FIG. 13 as seen from a direction of an arrow XIV.
- FIG. 15: is a front view showing the configuration of a vehicle transformer according to a fourth example not part of the present invention.
- FIG. 16: is a side view of the vehicle transformer of FIG. 15 as seen from a direction of an arrow XVI.
- FIG. 17: is a plan view of the vehicle transformer of FIG. 16 as seen from a direction of an arrow XVII.
- FIG. 18: is a front view showing the configuration of a vehicle transformer according to a first embodiment of the present invention.
- FIG. 19: is a side view of the vehicle transformer of FIG. 18 as seen from a direction of an arrow XIX.
- FIG. 20: is a plan view of the vehicle transformer of FIG. 19 as seen from a direction of an arrow XX.
- FIG. 21: is a front view showing the configuration of a vehicle transformer according to a second embodiment of the present invention.
- FIG. 22: is a side view of the vehicle transformer of FIG. 21 as seen from a direction of an arrow XXII.
- FIG. 23: is a plan view of the vehicle transformer of FIG. 22 as seen from a direction of an arrow XXIII.
- FIG. 24: is a front view showing a conservator in an extended state in a vehicle transformer according to a third embodiment of the present invention.
- FIG. 25: is a side view of the vehicle transformer of FIG. 24 as seen from a direction of an arrow XXV.
- FIG. 26: is a front view showing the conservator in a shortened state in the vehicle transformer according to the third embodiment of the present invention.
- FIG. 27: is a side view of the vehicle transformer of FIG. 26 as seen from a direction of an arrow XXVII.
- FIG. 28: is a front view showing the configuration of a vehicle transformer according to a fourth embodiment of the present invention.
- FIG. 29: is a side view of the vehicle transformer of FIG. 28 as seen from a direction of an arrow XXIX.

### DESCRIPTION OF EMBODIMENTS

Vehicle transformers according to embodiments of the present invention will be described below with reference to the drawings. In the following description of the embodiments, the same or corresponding parts in the drawings are designated by the same reference characters and will not be described repeatedly.

### First example

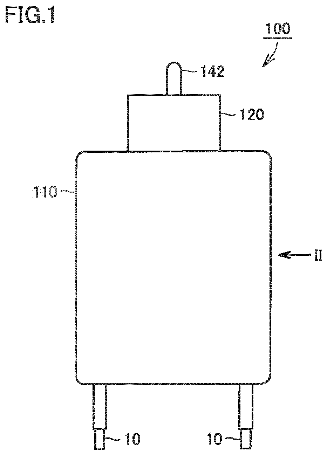

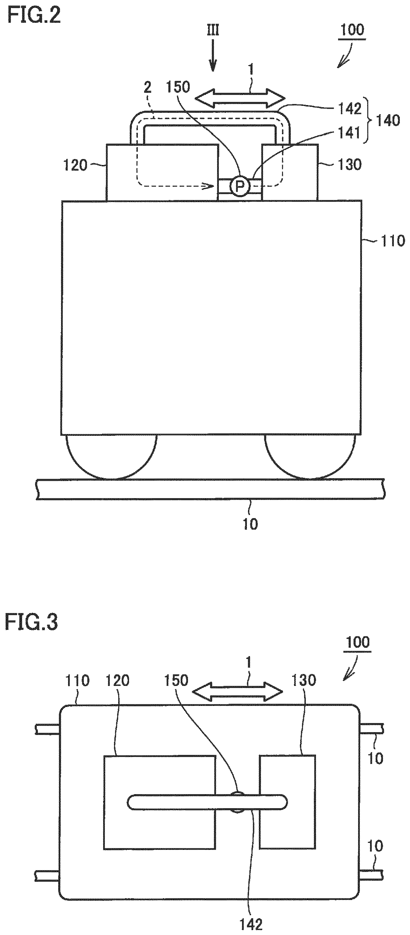

FIG. 1 is a front view showing the configuration of a vehicle transformer according to a first example of the present invention. FIG. 2 is a side view of the vehicle transformer of FIG. 1 as seen from a direction of an arrow II. FIG. 3 is a plan view of the vehicle transformer of FIG. 2 as seen from a direction of an arrow III.

As shown in FIGS. 1 to 3, a vehicle transformer 100 according to the first example not part of the present invention includes: a pipe 140 forming a circulation path of a coolant; a transformer body 120 connected to pipe 140 and having an iron core, a winding wound around the iron core, and a tank containing the iron core and the winding immersed in the coolant; one cooler 130 connected to pipe 140 and configured to cool the coolant by heat exchange with outside air; and a pump 150 connected to pipe 140 and configured to forcibly circulate the coolant.

Transformer body 120 and cooler 130 are arranged to be aligned along a traveling direction 1 of a vehicle 110 on the roof of vehicle 110. Traveling direction 1 of vehicle 110 is a direction along a rail 10 on which vehicle 110 runs. Although vehicle transformer 100 according to the present example includes only one cooler 130, vehicle transformer 100 is not limited to include one cooler 130 but may include a plurality of coolers 130.

The tank of transformer body 120 has a substantially rectangular parallelepiped outer shape. The ceiling and sidewalls of the tank are each located along traveling direction 1 of vehicle 110. The outer surface of the tank constitutes the surface of transformer body 120.

In vehicle transformer 100 according to the present example, pipe 140 serving as the circulation path of the coolant is formed of a first pipe 141 connecting portions of transformer body 120 and cooler 130 facing each other, and a second pipe 142 protruding from the ceiling of transformer body 120 and connecting transformer body 120 to cooler 130. The coolant is insulating oil in the present embodiment.

Each of first pipe 141 and second pipe 142 is located along traveling direction 1 of vehicle 110 in plan view. However, this is not limiting, and at least one of first pipe 141 and second pipe 142 may be located so as to intersect traveling direction 1 of vehicle 110 in plan view.

Pump 150 is connected to first pipe 141. By driving pump 150, the coolant circulates successively through first pipe 141, cooler 130, second pipe 142, and transformer body 120, as indicated by a dotted line 2 in FIG. 2.

Since second pipe 142 protrudes from the ceiling of transformer body 120, the outer circumferential surface of second pipe 142 can be brought into contact with running wind. By ensuring the contact between the running wind created by running of vehicle 110 and second pipe 142 in this manner, the coolant flowing through second pipe 142 can be cooled by heat exchange with the running wind. As a result, vehicle transformer 100 according to the present example can cool the coolant by efficiently utilizing the running wind.

Since at least part of pipe 140 protrudes from the surface of transformer body 120 along traveling direction 1 of vehicle 110 as described above, the contact between the running wind and pipe 140 can be ensured, thus allowing the coolant to be cooled by efficient utilization of the running wind.

In vehicle transformer 100 according to the present example, since second pipe 142 protrudes from the ceiling of transformer body 120, the contact between natural wind and second pipe 142 can be ensured regardless of the direction of the wind. Thus, the coolant flowing through second pipe 142 can also be cooled by heat exchange with the natural wind.

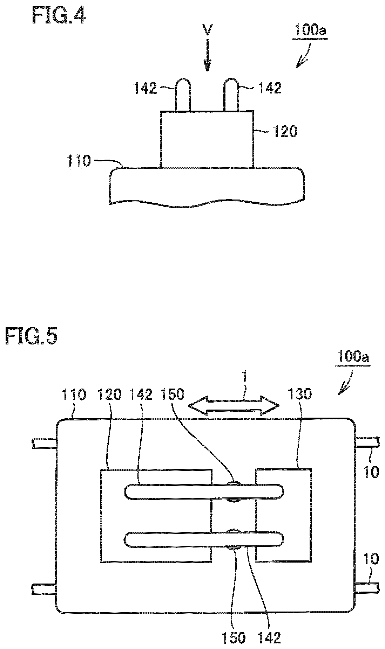

A vehicle transformer according to a first modification of the present example is now described. FIG. 4 is a front view showing the configuration of the vehicle transformer according to the first modification of the first example of the present invention. FIG. 5 is a plan view of the vehicle transformer of FIG. 4 as seen from a direction of an arrow V.

As shown in FIGS. 4 and 5, in a vehicle transformer 100a according to the first modification of the first example of the present invention, pipe 140 is formed of two first pipes 141 and two second pipes 142. Pump 150 is connected to each of two first pipes 141. Two first pipes 141 are aligned parallel to and at a distance from each other. Two second pipes 142 are aligned parallel to and at a distance from each other.

Such an arrangement of the plurality of second pipes 142 can increase the surface area through which the running wind and the coolant can exchange heat. As a result, the coolant can be cooled by efficient utilization of the running wind.

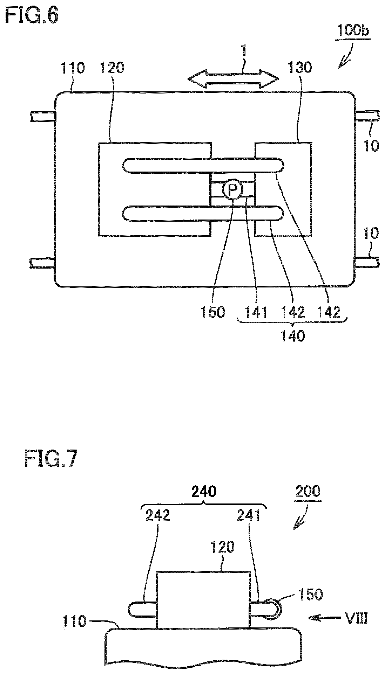

A vehicle transformer according to a second modification of the present example is now described. FIG. 6 is a plan view showing the configuration of the vehicle transformer according to the second modification of the first example of the present invention. As shown in FIG. 6, in a vehicle transformer 100b according to the second modification of the first example of the present invention, pipe 140 is formed of one first pipe 141 and two second pipes 142. Two first pipes 141 are aligned parallel to and at a distance from each other.

Again in the present modification, the arrangement of the plurality of second pipes 142 can increase the surface area through which the running wind and the coolant can exchange heat. As a result, the coolant can be cooled by efficient utilization of the running wind.

A vehicle transformer according to a second example not part of the present invention is now described. It is noted that a vehicle transformer 200 according to the present example is different from vehicle transformer 100 according to the first example only in configuration of the pipes, and therefore, description of the remaining configuration will not be repeated.

### Second example

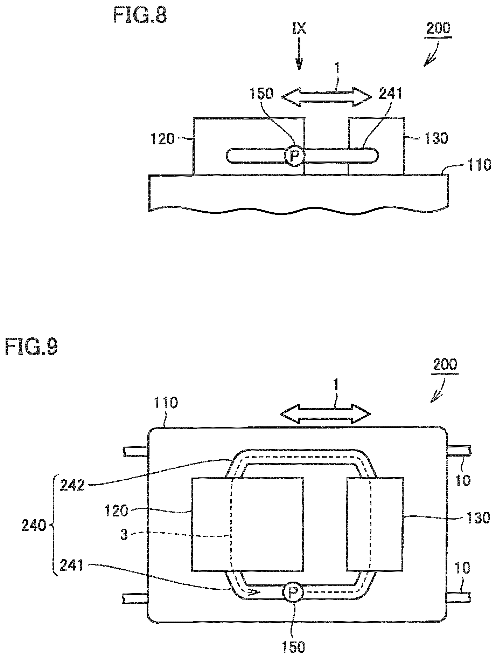

FIG. 7 is a front view showing the configuration of the vehicle transformer according to the second example not part of the present invention. FIG. 8 is a side view of the vehicle transformer of FIG. 7 as seen from a direction of an arrow VIII. FIG. 9 is a plan view of the vehicle transformer of FIG. 8 as seen from a direction of an arrow IX.

As shown in FIGS. 7 to 9, vehicle transformer 200 according to the second example not part of the present invention includes a pipe 240 forming the circulation path of the coolant. In vehicle transformer 200 according to the present example pipe 240 serving as the circulation path of the coolant is formed of a first pipe 241 protruding from one sidewall of transformer body 120 and connecting transformer body 120 to cooler 130, and a second pipe 242 protruding from the other sidewall of transformer body 120 and connecting transformer body 120 to cooler 130.

Each of first pipe 241 and second pipe 242 is located along traveling direction 1 of vehicle 110 in side view. However, this is not limiting, and at least one of first pipe 241 and second pipe 242 may be located so as to intersect traveling direction 1 of vehicle 110 in side view.

Pump 150 is connected to first pipe 241. By driving pump 150, the coolant circulates successively through first pipe 241, cooler 130, second pipe 242, and transformer body 120, as indicated by a dotted line 3 in FIG. 9.

Since each of first pipe 241 and second pipe 242 protrudes from the sidewall of transformer body 120, the outer circumferential surface of each of first pipe 241 and second pipe 242 can be brought into contact with running wind. By ensuring the contact between the running wind created by running of vehicle 110 and each of first pipe 241 and second pipe 242 in this manner, the coolant flowing through each of first pipe 241 and second pipe 242 can be cooled by heat exchange with the running wind. As a result, vehicle transformer 200 according to the present example can cool the coolant by efficiently utilizing the running wind.

Since at least part of pipe 240 protrudes from the surface of transformer body 120 along traveling direction 1 of vehicle 110 as described above, the contact between the running wind and pipe 240 can be ensured, thus allowing the coolant to be cooled by efficient utilization of the running wind.

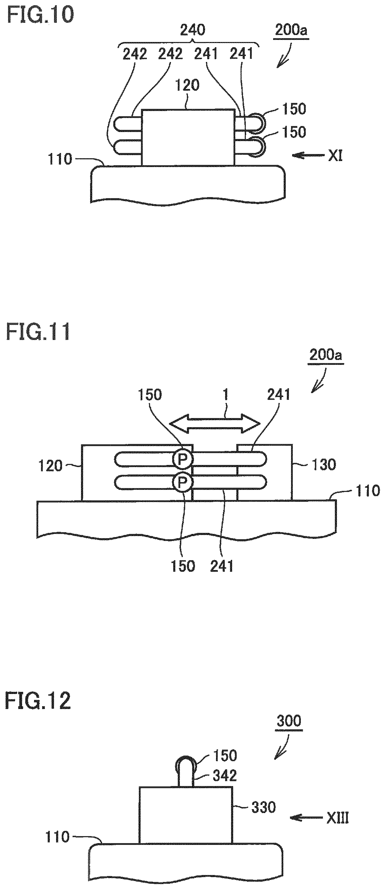

A vehicle transformer according to a modification of the present example is now described. FIG. 10 is a front view showing the configuration of the vehicle transformer according to the modification of the second example of the present invention. FIG. 11 is a side view of the vehicle transformer of FIG. 10 as seen from a direction of an arrow XI.

As shown in FIGS. 10 and 11, in a vehicle transformer 200a according to the modification of the second example of the present invention, pipe 240 is formed of two first pipes 241 and two second pipes 242. Pump 150 is connected to each of two first pipes 241. Two first pipes 241 are aligned parallel to and at a distance from each other. Two second pipes 242 are aligned parallel to and at a distance from each other.

Such an arrangement of the plurality of first pipes 241 and the plurality of second pipes 242 can increase the surface area through which the running wind and the coolant can exchange heat. As a result, the coolant can be cooled by efficient utilization of the running wind.

A vehicle transformer according to a third example not part of the present invention is now described. It is noted that a vehicle transformer 300 according to the present example is different from vehicle transformer 100 according to the first example only in configuration of the cooler and pipes, and therefore, description of the remaining configuration will not be repeated.

### Third example

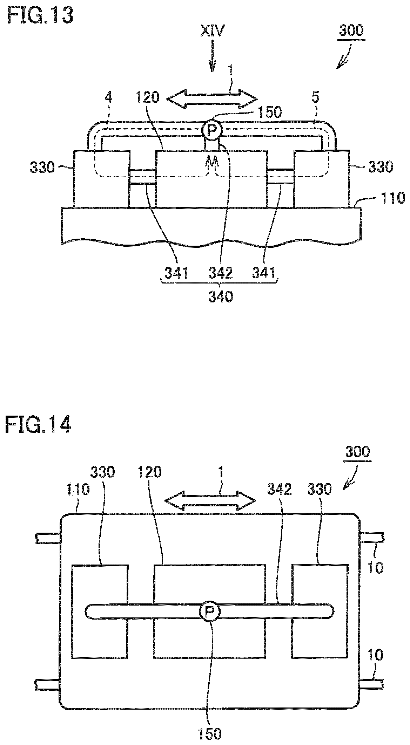

FIG. 12 is a front view showing the configuration of the vehicle transformer according to the third example not part of the present invention. FIG. 13 is a side view of the vehicle transformer of FIG. 12 as seen from a direction of an arrow XIII. FIG. 14 is a plan view of the vehicle transformer of FIG. 13 as seen from a direction of an arrow XIV.

As shown in FIGS. 12 to 14, vehicle transformer 300 according to the third example not part of the present invention includes a pipe 340 forming the circulation path of the coolant, and two coolers 330 connected to pipe 340 and configured to cool the coolant by heat exchange with outside air.

Transformer body 120 and two coolers 330 are arranged to be aligned along traveling direction 1 of vehicle 110 on the roof of vehicle 110. Transformer body 120 is arranged between two coolers 330.

In vehicle transformer 300 according to the present example, pipe 340 serving as the circulation path of the coolant is formed of two first pipes 341 each connecting portions of transformer body 120 and each of two coolers 330 facing each other, and a second pipe 342 protruding from the ceiling of transformer body 120 and connecting transformer body 120 to two coolers 330.

Each of two first pipes 341 and second pipe 342 is located along traveling direction 1 of vehicle 110 in plan view. However, this is not limiting, and at least one of first pipes 341 and second pipe 342 may be located so as to intersect traveling direction 1 of vehicle 110 in plan view.

Pump 150 is connected in the vicinity of a portion of second pipe 342 which is connected to transformer body 120. By driving pump 150, the coolant is branched and circulates successively through second pipe 342, coolers 330, first pipes 341, and transformer body 120, as indicated by dotted lines 4 and 5 in FIG. 13, so as to pass through each of two coolers 300.

Since second pipe 342 protrudes from the ceiling of transformer body 120, the outer circumferential surface of second pipe 342 can be brought into contact with running wind. By ensuring the contact between the running wind created by running of vehicle 110 and second pipe 342 in this manner, the coolant flowing through second pipe 342 can be cooled by heat exchange with the running wind. As a result, vehicle transformer 300 according to the present example can cool the coolant by efficiently utilizing the running wind.

A vehicle transformer according to a fourth example not part of the present invention is now described. It is noted that a vehicle transformer 400 according to the present example is different from vehicle transformer 300 according to the third example only in configuration of the pipes, and therefore, description of the remaining configuration will not be repeated.

### Fourth example

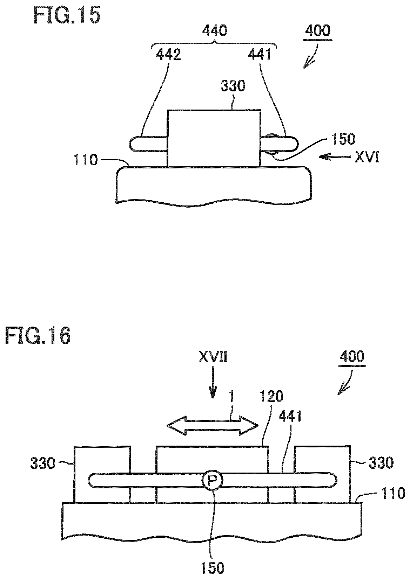

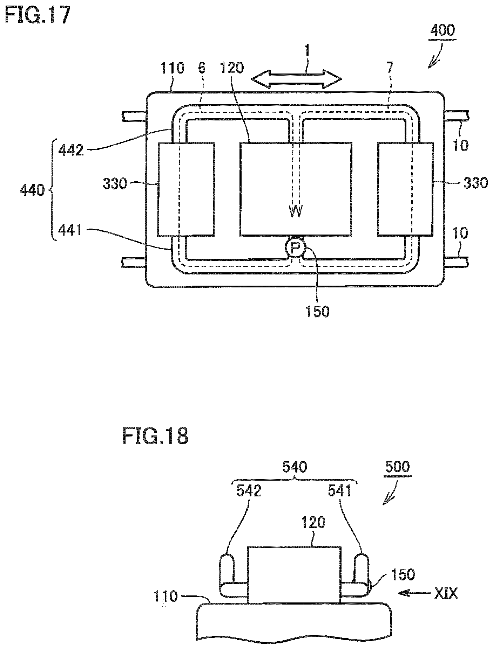

FIG. 15 is a front view showing the configuration of the vehicle transformer according to the fourth example not part of the present invention. FIG. 16 is a side view of the vehicle transformer of FIG. 15 as seen from a direction of an arrow XVI. FIG. 17 is a plan view of the vehicle transformer of FIG. 16 as seen from a direction of an arrow XVII.

As shown in FIGS. 15 to 17, vehicle transformer 400 according to the fourth example not part of the present invention includes a pipe 440 forming the circulation path of the coolant. In vehicle transformer 400 according to the present example, pipe 440 serving as the circulation path of the coolant is formed of a first pipe 441 protruding from one sidewall of transformer body 120 and connecting transformer body 120 to two coolers 330, and a second pipe 442 protruding from the other sidewall of transformer body 120 and connecting transformer body 120 to two coolers 330.

Each of first pipe 441 and second pipe 442 is located along traveling direction 1 of vehicle 110 in side view. However, this is not limiting, and at least one of first pipe 441 and second pipe 442 may be located so as to intersect traveling direction 1 of vehicle 110 in side view.

Pump 150 is connected in the vicinity of a portion of first pipe 441 which is connected to transformer body 120. By driving pump 150, the coolant is branched and circulates successively through first pipe 441, coolers 330, second pipe 442, and transformer body 120, as indicated by dotted lines 6 and 7 in FIG. 17, so as to pass through each of two coolers 300.

Since each of first pipe 441 and second pipe 442 protrudes from the sidewall of transformer body 120, the outer circumferential surface of each of first pipe 441 and second pipe 442 can be brought into contact with running wind. By ensuring the contact between the running wind created by running of vehicle 110 and each of first pipe 441 and second pipe 442 in this manner, the coolant flowing through each of first pipe 441 and second pipe 442 can be cooled by heat exchange with the running wind. As a result, vehicle transformer 400 according to the present example can cool the coolant by efficiently utilizing the running wind.

A vehicle transformer according to a first embodiment of the present invention is now described. It is noted that a vehicle transformer 500 according to the present embodiment is different from vehicle transformer 100 according to the first example only in configuration of the pipes, and therefore, description of the remaining configuration will not be repeated.

### First embodiment

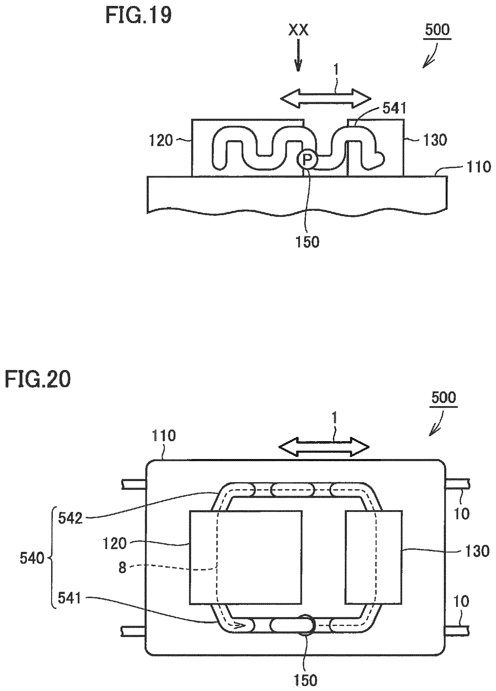

FIG. 18 is a front view showing the configuration of the vehicle transformer according to the first embodiment of the present invention. FIG. 19 is a side view of the vehicle transformer of FIG. 18 as seen from a direction of an arrow XIX. FIG. 20 is a plan view of the vehicle transformer of FIG. 19 as seen from a direction of an arrow XX.

As shown in FIGS. 18 to 20, vehicle transformer 500 according to the first embodiment of the present invention includes a pipe 540 forming the circulation path of the coolant. In vehicle transformer 500 according to the present embodiment, pipe 540 serving as the circulation path of the coolant is formed of a first pipe 541 protruding from one sidewall of transformer body 120 and connecting transformer body 120 to cooler 130, and a second pipe 542 protruding from the other sidewall of transformer body 120 and connecting transformer body 120 to cooler 130.

In side view, each of first pipe 541 and second pipe 542 extends intermittently along traveling direction 1 of vehicle 110 while being arranged in a zigzag pattern by being bent alternately upward and downward at the plurality of intermittent portions. Each of first pipe 541 and second pipe 542 is arranged in a U shape in plan view.

Pump 150 is connected to first pipe 541. By driving pump 150, the coolant circulates successively through first pipe 541, cooler 130, second pipe 542, and transformer body 120, as indicated by a dotted line 8 in FIG. 20.

Since each of first pipe 541 and second pipe 542 protrudes from the sidewall of transformer body 120, the outer circumferential surface of each of first pipe 541 and second pipe 542 can be brought into contact with running wind. By ensuring the contact between the running wind created by running of vehicle 110 and each of first pipe 541 and second pipe 542 in this manner, the coolant flowing through each of first pipe 541 and second pipe 542 can be cooled by heat exchange with the running wind. As a result, vehicle transformer 500 according to the present embodiment can cool the coolant by efficiently utilizing the running wind.

In vehicle transformer 500 according to the present embodiment, since each of first pipe 541 and second pipe 542 is arranged in a zigzag pattern, the surface area through which the running wind and the coolant can exchange heat can be increased. As a result, the coolant can be cooled by efficient utilization of the running wind.

A vehicle transformer according to a second embodiment of the present embodiment is now described. It is noted that a vehicle transformer 600 according to the present embodiment is different from vehicle transformer 100 according to the first example only in configuration of the pipes, and therefore, description of the remaining configuration will not be repeated.

### Second embodiment

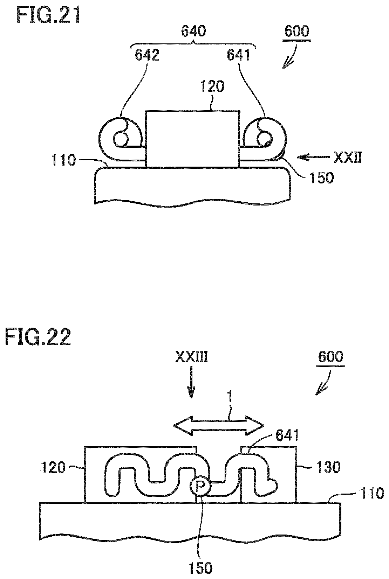

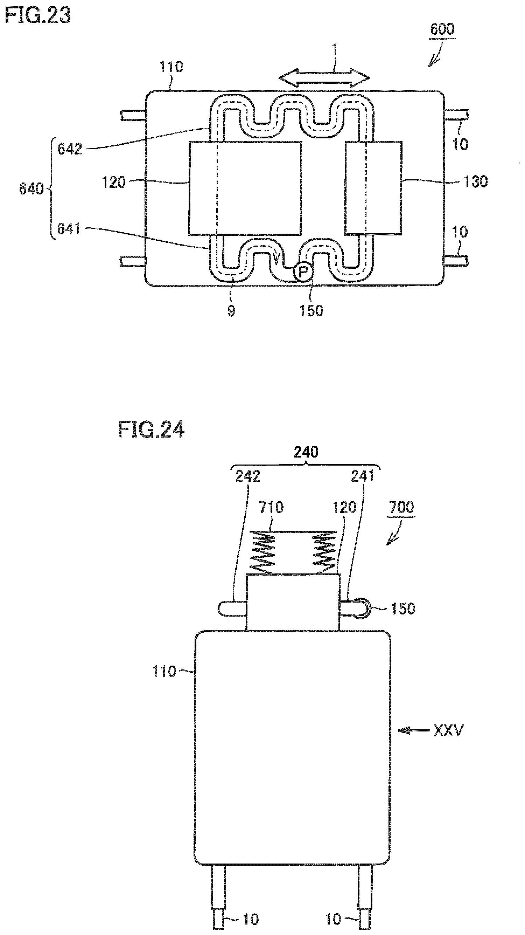

FIG. 21 is a front view showing the configuration of the vehicle transformer according to the second embodiment of the present invention. FIG. 22 is a side view of the vehicle transformer of FIG. 21 as seen from a direction of an arrow XXII. FIG. 23 is a plan view of the vehicle transformer of FIG. 22 as seen from a direction of an arrow XXIII.

As shown in FIGS. 21 to 23, vehicle transformer 600 according to the second embodiment of the present invention includes a pipe 640 forming the circulation path of the coolant. In vehicle transformer 600 according to the present embodiment, pipe 640 serving as the circulation path of the coolant is formed of a first pipe 641 protruding from one sidewall of transformer body 120 and connecting transformer body 120 to cooler 130, and a second pipe 642 protruding from the other sidewall of transformer body 120 and connecting transformer body 120 to cooler 130.

In side view, each of first pipe 641 and second pipe 642 extends intermittently along traveling direction 1 of vehicle 110 while being arranged in a zigzag pattern by being bent alternately upward and downward at the plurality of intermittent portions. In plan view, each of first pipe 641 and second pipe 642 extends intermittently along traveling direction 1 of vehicle 110 while being arranged in a zigzag pattern by being bent in a direction orthogonal to traveling direction 1 of vehicle 110 alternately at the plurality of intermittent portions. That is, each of first pipe 641 and second pipe 642 has a spiral shape.

Pump 150 is connected to first pipe 641. By driving pump 150, the coolant circulates successively through first pipe 641, cooler 130, second pipe 642, and transformer body 120, as indicated by a dotted line 9 in FIG. 23.

Since each of first pipe 641 and second pipe 642 protrudes from the sidewall of transformer body 120, the outer circumferential surface of each of first pipe 641 and second pipe 642 can be brought into contact with running wind. By ensuring the contact between the running wind created by running of vehicle 110 and each of first pipe 641 and second pipe 642 in this manner, the coolant flowing through each of first pipe 641 and second pipe 642 can be cooled by heat exchange with the running wind. As a result, vehicle transformer 600 according to the present embodiment can cool the coolant by efficiently utilizing the running wind.

In vehicle transformer 600 according to the present embodiment, since each of first pipe 641 and second pipe 642 is arranged in a spiral shape, the surface area through which the running wind and the coolant can exchange heat can be increased, and the running wind can be guided to pass through the spiral shape formed by each of first pipe 641 and second pipe 642. As a result, the coolant can be cooled by efficient utilization of the running wind.

A vehicle transformer according to a third embodiment of the present embodiment is now described. It is noted that a vehicle transformer 700 according to the present embodiment is different from vehicle transformer 200 according to the second example only in that it includes a conservator, and therefore, description of the remaining configuration will not be repeated.

### Third embodiment

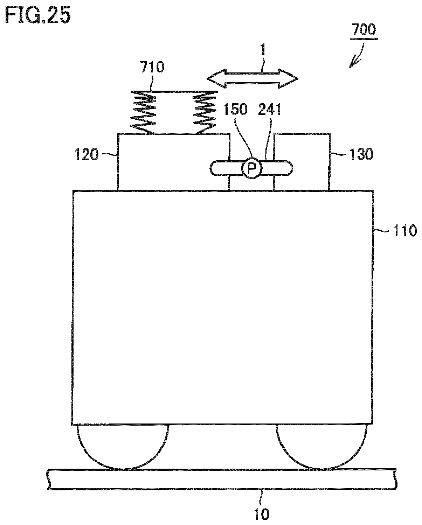

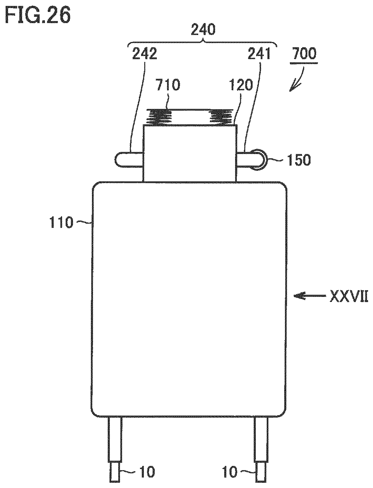

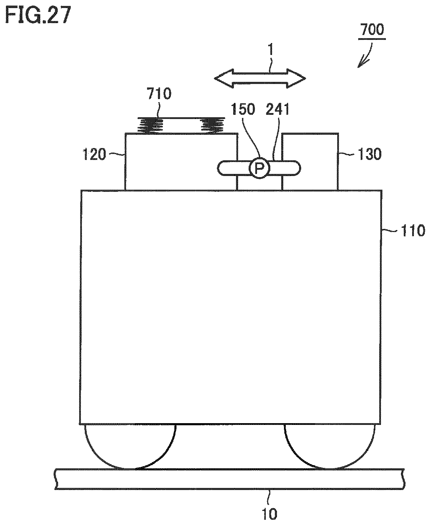

FIG. 24 is a front view showing the conservator in an extended state in the vehicle transformer according to the third embodiment of the present invention. FIG. 25 is a side view of the vehicle transformer of FIG. 24 as seen from a direction of an arrow XXV. FIG. 26 is a front view showing the conservator in a shortened state in the vehicle transformer according to the third embodiment of the present invention. FIG. 27 is a side view of the vehicle transformer of FIG. 26 as seen from a direction of an arrow XXVII.

As shown in FIGS. 24 to 27, vehicle transformer 700 according to the third embodiment of the present invention further includes a conservator 710 filled with the coolant. Conservator 710 is connected to the ceiling of transformer body 120. That is, conservator 710 protrudes from the ceiling of transformer body 120. Specifically, conservator 710 is connected to an opening provided in the ceiling of the tank of transformer body 120, and the inside of conservator 710 communicates with the inside of the tank.

Conservator 710 has a bellows-shaped peripheral wall, and is provided such that it can be extended and shortened. The bellows-shaped peripheral wall of conservator 710 is exposed and in contact with outside air. When the temperature of the coolant in the tank increases to result in expansion of the coolant, the coolant flows into conservator 710, causing conservator 710 to be extended. When the temperature of the coolant in the tank drops to result in contraction of the coolant, on the other hand, the coolant flows out of conservator 710, causing conservator 710 to be shortened.

Since conservator 710 protrudes from the ceiling of transformer body 120, the outer circumferential surface of conservator 710 can be brought into contact with running wind. By ensuring the contact between the running wind created by running of vehicle 110 and conservator 710 in this manner, the coolant filling conservator 710 can be cooled by heat exchange with the running wind. As a result, vehicle transformer 100 according to the present embodiment can cool the coolant by efficiently utilizing the running wind.

In particular, when a high-temperature coolant flows into conservator 710 to result in extension of conservator 710, the surface area through which the bellows-shaped peripheral wall and the running wind come into contact with each other increases as compared to when conservator 710 is in the shortened state, so that the high-temperature coolant can be cooled more effectively.

A vehicle transformer according to an fourth embodiment of the present invention is now described. It is noted that a vehicle transformer 800 according to the present embodiment is different from vehicle transformer 200 according to the second example only in that it includes a reinforcing plate of the tank, and therefore, description of the remaining configuration will not be repeated.

### Fourth embodiment

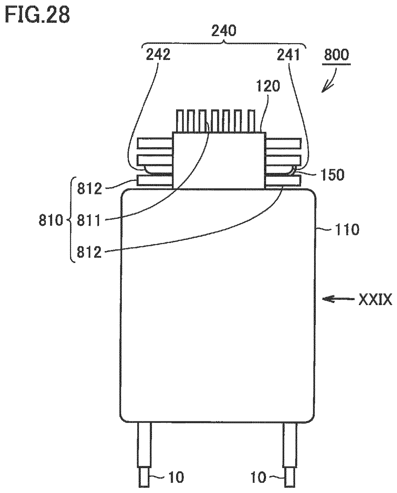

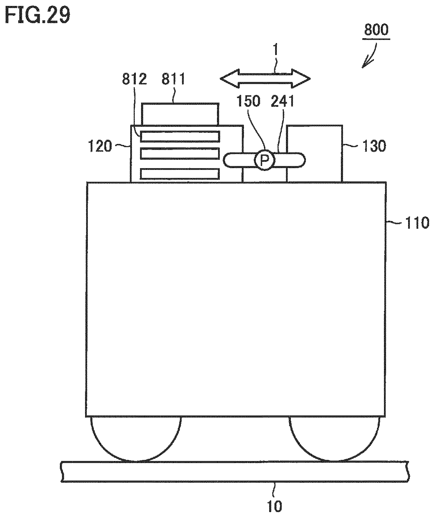

FIG. 28 is a front view showing the configuration of the vehicle transformer according to the fourth embodiment of the present invention. FIG. 29 is a side view of the vehicle transformer of FIG. 28 as seen from a direction of an arrow XXIX.

As shown in FIGS. 28 and 29, in vehicle transformer 800 according to the fourth embodiment of the present invention, transformer body 120 includes a plurality of reinforcing plates 810 for reinforcing the tank.

In vehicle transformer 800 according to the present embodiment, reinforcing plates 810 are formed of a plurality of first reinforcing plates 811 protruding from the ceiling of transformer body 120 and located along traveling direction 1 of vehicle 110, and a plurality of second reinforcing plates 812 protruding from the sidewalls of transformer body 120 and located along traveling direction 1 of vehicle 110.

Each of first reinforcing plates 811 and second reinforcing plates 812 is formed of a metal plate having a rectangular outer shape. First reinforcing plates 811 are joined to the ceiling of the tank by welding. Second reinforcing plates 812 are joined to the sidewalls of the tank by welding. Second reinforcing plates 812 are joined to both sidewalls of the tank.

It is noted that reinforcing plates 810 are only required to be formed of at least one of first reinforcing plates 811 and second reinforcing plates 812. It is only required that the number of reinforcing plates 810 be at least one. Furthermore, at least one of first reinforcing plates 811 and second reinforcing plates 812 may be located so as to intersect traveling direction 1 of vehicle 110.

Reinforcing plates 810 also function as a heat sink of the tank. By providing reinforcing plates 810, the coolant in the tank can be cooled. Since at least part of reinforcing plates 810 protrudes from the surface of transformer body 120 along traveling direction 1 of vehicle 110, the contact between the running wind and reinforcing plates 810 can be ensured, thus allowing the coolant to be cooled by efficient utilization of the running wind.

It is noted that the embodiments disclosed herein are illustrative in every respect, and do not serve as a basis for restrictive interpretation. Therefore, the technical scope of the present invention should not be interpreted based on the foregoing embodiments only, and is defined by the scope of the claims.

### LIST OF REFERENCE SIGNS

- 1: traveling direction of vehicle
- 10: rail
- 100: vehicle transformer
- 100a: vehicle transformer
- 100b: vehicle transformer
- 110: vehicle
- 120: transformer body
- 130: cooler
- 140: pipe
- 141: first pipe
- 142: second pipe
- 150: pump
- 200: vehicle transformer
- 200a: vehicle transformer
- 240: pipe
- 241: first pipe
- 242: second pipe
- 300: vehicle transformer
- 330: cooler
- 340: pipe
- 341: first pipe
- 342: second pipe
- 400: vehicle transformer
- 440: pipe
- 441: first pipe
- 442: second pipe
- 500: vehicle transformer
- 540: pipe
- 541: first pipe
- 542: second pipe
- 600: vehicle transformer
- 640: pipe
- 641: first pipe
- 642: second pipe
- 700: vehicle transformer
- 710: conservator
- 800: vehicle transformer
- 810: reinforcing plate
- 811: first reinforcing plate
- 812: second reinforcing plate.

## Claims

1. A vehicle transformer (100) comprising:
a pipe (540, 640) forming a circulation path of a coolant;
a transformer body (120) connected to the pipe and having an iron core, a winding wound around the iron core, and a tank containing the iron core and the winding immersed in the coolant;
at least one cooler (130, 330) connected to the pipe (540, 640) and configured to cool the coolant by heat exchange with outside air; and
a pump (150) connected to the pipe (540, 640) and configured to forcibly circulate the coolant,
the transformer body (120) and the coolant being arranged to be aligned along a traveling direction of a vehicle (110) on a roof of the vehicle (110),
at least part of the pipe (540, 640) protruding from a surface of the transformer body (120) along the traveling direction of the vehicle (110), **characterised in that**
at least part of the pipe (540, 640) protruding from a sidewall of the transformer body,
in side view, the pipe (540, 640) extending intermittently along the traveling direction of the vehicle (110) while being arranged in a zigzag pattern by being bent alternately upward and downward at a plurality of intermittent portions.

2. The vehicle transformer (100) according to claim 1, wherein in plan view, the pipe intermittent portions extends intermittently along the traveling direction of the vehicle (110) while being arranged in a zigzag pattern by being bent in a direction orthogonal to the traveling direction of the vehicle (110) alternately at the plurality of intermittent portions and wherein the pipe (540, 640) has a spiral shape.

3. The vehicle transformer (100) according to claim 1 or 2, further comprising a conservator (710) connected to a ceiling of the transformer body (120) and filled with the coolant, wherein the conservator (710) has a bellows-shaped peripheral wall exposed and in contact with outside air.

4. The vehicle transformer (100) according to any one of claims 1 to 3, wherein the transformer body (120) includes at least one reinforcing plate (810, 811, 812) for reinforcing the tank, and
at least part of the reinforcing plate (810, 811, 812) protrudes from the surface of the transformer body (120) along the traveling direction of the vehicle (110).

## Patentansprüche

1. Fahrzeugtransformator (100), aufweisend:
ein Rohr (540, 640), das einen Zirkulationsweg für ein Kühlmittel bildet;
einen Transformatorkörper (120), der mit dem Rohr verbunden ist und einen Eisenkern, eine um den Eisenkern gewickelte Wicklung und einen Behälter aufweist, der den Eisenkern und die in das Kühlmittel eingetauchte Wicklung enthält;
mindestens einen Kühler (130, 330), der mit dem Rohr (540, 640) verbunden und so konfiguriert ist, dass er das Kühlmittel durch Wärmeaustausch mit Außenluft kühlt; und
eine Pumpe (150), die mit dem Rohr (540, 640) verbunden und so konfiguriert ist, dass sie das Kühlmittel zwangsweise umwälzt,
wobei der Transformatorkörper (120) und das Kühlmittel so angeordnet sind, dass sie entlang einer Fahrtrichtung eines Fahrzeugs (110) auf einem Dach des Fahrzeugs (110) ausgerichtet sind,
wobei zumindest ein Teil des Rohrs (540, 640) von einer Oberfläche des Transformatorkörpers (120) entlang der Fahrtrichtung des Fahrzeugs (110) vorsteht,
**dadurch gekennzeichnet,**
**dass** zumindest ein Teil des Rohrs (540, 640) von einer Seitenwand des Transformatorkörpers absteht,
wobei sich in Seitenansicht das Rohr (540, 640) intermittierend entlang der Fahrtrichtung des Fahrzeugs (110) erstreckt, während es in einem Zickzackmuster angeordnet ist, indem es an einer Vielzahl von intermittierenden Bereichen abwechselnd nach oben und nach unten gebogen ist.

2. Fahrzeugtransformator (100) nach Anspruch 1, wobei sich das Rohr in der Draufsicht intermittierend entlang der Fahrtrichtung des Fahrzeugs (110) erstreckt, während es in einem Zickzack-Muster angeordnet ist, indem es in einer Richtung orthogonal zur Fahrtrichtung des Fahrzeugs (110) abwechselnd an der Vielzahl der intermittierenden Bereiche gebogen ist, und wobei das Rohr (540, 640) eine Spiralform aufweist.

3. Fahrzeugtransformator (100) nach Anspruch 1 oder 2, ferner aufweisend ein Ausdehnungsgefäß (710), das mit einer Decke des Transformatorkörpers (120) verbunden und mit dem Kühlmittel gefüllt ist, wobei das Ausdehnungsgefäß (710) eine balgförmige Umfangswand aufweist, die freiliegt und mit Außenluft in Kontakt steht.

4. Fahrzeugtransformator (100) nach einem der Ansprüche 1 bis 3, wobei der Transformatorkörper (120) mindestens eine Verstärkungsplatte (810, 811, 812) zur Verstärkung des Behälters aufweist, und
zumindest ein Teil der Verstärkungsplatte (810, 811, 812) von der Oberfläche des Transformatorkörpers (120) entlang der Fahrtrichtung des Fahrzeugs (110) vorsteht.

## Revendications

1. Transformateur de véhicule (100) comprenant :
un tuyau (540, 640) formant un trajet de circulation d'un liquide de refroidissement ;
un corps de transformateur (120) relié au tuyau et présentant un noyau de fer, un enroulement enroulé autour du noyau de fer et un réservoir contenant le noyau de fer et l'enroulement immergé dans le liquide de refroidissement ;
au moins un refroidisseur (130, 330) relié au tuyau (540, 640) et configuré pour refroidir le liquide de refroidissement par échange de chaleur avec l'air extérieur ; et
une pompe (150) reliée au tuyau (540, 640) et configurée pour faire circuler de manière forcée le liquide de refroidissement,
le corps de transformateur (120) et le liquide de refroidissement étant agencés pour être alignés le long d'une direction de déplacement d'un véhicule (110) sur un toit du véhicule (110),
au moins une portion du tuyau (540, 640) faisant saillie d'une surface du corps de transformateur (120) le long de la direction de déplacement du véhicule (110), **caractérisé en ce**
**qu'**au moins une portion du tuyau (540, 640) fait saillie d'une paroi latérale du corps de transformateur,
en vue de côté, le tuyau (540, 640) s'étend de manière intermittente le long de la direction de déplacement du véhicule (110) tout en étant agencé selon un motif en zigzag en étant plié alternativement vers le haut et vers le bas au niveau d'une pluralité de portions intermittentes.

2. Transformateur de véhicule (100) selon la revendication 1, dans lequel, en vue en plan, les portions intermittentes de tuyau s'étendent de manière intermittente le long de la direction de déplacement du véhicule (110) tout en étant agencées selon un motif en zigzag en étant pliées dans une direction orthogonale à la direction de déplacement du véhicule (110) alternativement au niveau de la pluralité de portions intermittentes et dans lequel le tuyau (540, 640) présente une forme en spirale.

3. Transformateur de véhicule (100) selon la revendication 1 ou 2, comprenant en outre un conservateur (710) relié à un plafond du corps de transformateur (120) et rempli du liquide de refroidissement, dans lequel le conservateur (710) présente une paroi périphérique en forme de soufflet exposée et en contact avec l'air extérieur.

4. Transformateur de véhicule (100) selon l'une quelconque des revendications 1 à 3, dans lequel le corps de transformateur (120) inclut au moins une plaque de renforcement (810, 811, 812) pour renforcer le réservoir et
au moins une partie de la plaque de renforcement (810, 811, 812) fait saillie de la surface du corps de transformateur (120) le long de la direction de déplacement du véhicule (110).
